# EUROPEAN PATENT APPLICATION

(11) **EP 0 590 586 A1**
(43) Date of publication of application: **06.04.1994**
(21) Application number: 93115614.5
(22) Date of filing: 28.09.1993
(51) Int. Cl.: G02B 6/38

(54) **Optical fiber connector parts formed of zirconia**

(30) Priority: 29.09.1992 JP 259862/92
(71) Applicant: TOSOH CORPORATION, Yamaguchi-ken 746 (JP); NIPPON TELEGRAPH AND TELEPHONE CORPORATION, Tokyo 100 (JP); NTT ADVANCED TECHNOLOGY CORPORATION, Musashino-shi, Tokyo (JP)
(72) Inventor: Nakagawa, Osamu, Tsukuba-shi, Ibaragi-ken (JP); Sugita, Etsuji, c/o NTT Advanced Technology Corp., Musashino-shi, Tokyo (JP); Shimizu, Yuichi, c/o NTT Advanced Technology Corp., Musashino-shi, Tokyo (JP); Ando, Yasuhiro, Houya-shi, Tokyo (JP)
(74) Representative: Tiedtke, Harro, Dipl.-Ing.

(57) **Abstract**

An optical fiber connector having high heat resistance property and high strength and toughness, and further possessing good workability and environmental resistance. A ferrule having a narrow hole for receiving and holding an optical fiber and a sleeve connecting and holding the ferrule are formed mainly of zirconia ceramics obtained by adding cerium oxide as stabilizer.

## Description

### Background of the Invention:

### Field of the Invention:

The present invention relates to connector parts formed of zirconia being excellent in resistance to heat-deterioration and having high strength and toughness. A ferrule and a split sleeve according to the present invention are used as optical fiber connectors, or the like, for multi-mode or single-mode optical fibers, and in particular, are particularly suitable for connecting optical fibers requiring higher dimensional precision More particularly, the present invention provides a ferrule used as a connecting part for connecting the fibers and also a sleeve for firmly connecting the ferrules to each other which are used in fiber optic communication systems which are expected to develop rapidly as a communication medium in the future, and the present invention provides a ceramic material for production of the optical fiber connectors, which essentially consists of ceramics using zirconia partially stabilized by cerium oxide, thereby preventing an increase in axis discrepancy of the optical fibers caused by a deterioration in dimensional precision due to grain separation, and further preventing an increase in connection loss, thus enhancing the life of the connector and inhibiting deterioration caused by the environment. An optical fiber is inserted into the narrow hole of the ferrule to be combined into one part. The top ends of the fiber are spherically-worked and two resulting spherical surfaces are pressingly connected to each other from both right and left sides in the adapter.

### Description of the Related Art:

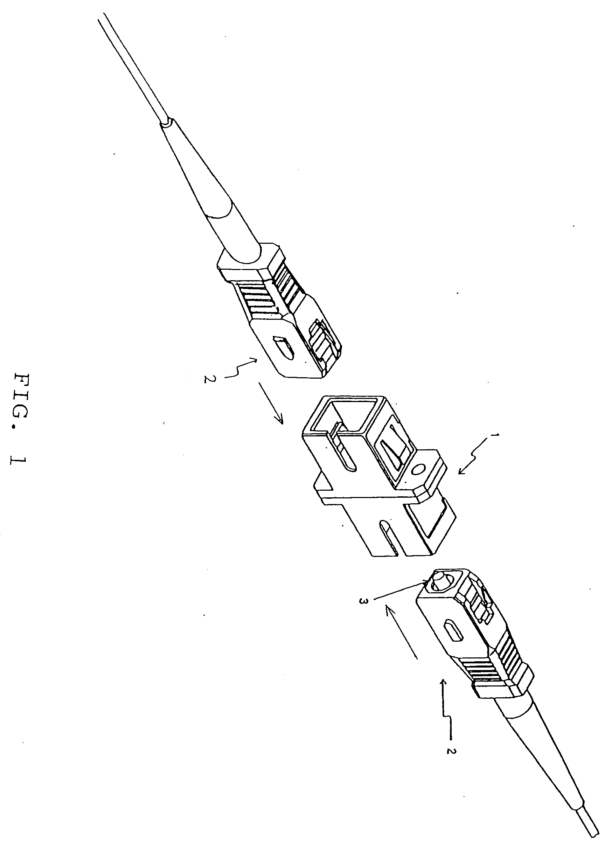

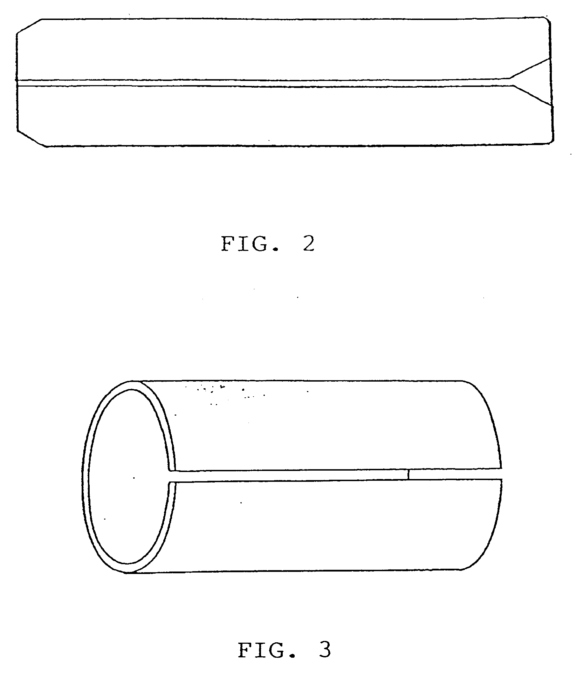

Conventionally, a connector used for fiber optic communication comprises a plug and an adapter, as shown in Fig. 1. As illustrated in Fig. 2, a cylindrical ferrule is accommodated within the plug so as to have an extremely precisely-worked narrow hole at the center of the ferrule based on the outer diameter of the cylinder. During this operation, if axis displacement occurs in connecting the optical fiber terminals, the optical loss occurs, and thus, a large amount of transmission loss is caused. Consequently, a ferrule component must be extremely highly precise in dimensions, such as outer diameter, inner diameter and length. A ferrule material is currently formed of resin, metal, ceramics, or the like. Among them, ceramics have the advantage of greater hardness and a smaller thermal expansion coefficient than resin and metal. In particular, since ceramics such as alumina, zirconia, or the like, have an extremely small sinter grain size, the work precisions are satisfactory.

A split sleeve shown in Fig. 3 is built in the adapter so as to elastically support and position two ferrules (3). Phosphor bronze is generally used as a split sleeve material, but a split sleeve formed of zirconia has also been developed recently.

Partially stabilized zirconia containing yttrium oxide is almost used as zirconia. Since such a material has a smaller grain size and good workability, it possesses extremely good properties. Consequently the resulting product has an extremely low profile irregularity and higher toughness, thus virtually free from defects, such as chipping, and further having higher strength, and the like. On the other hand, however, partially stabilized zirconia has poor heat resistance, and particularly when it contains steam, it is likely to be transformed from the tetragonal phase to the monoclinic phase at a temperature between 100 - 300°C. Thus, the material starts deteriorating from the surface layer, and the resultant product might be deformed due to the volume expansion and the grains might fall off. As a result, a connection failure might be further caused when the connector is reused. As can be clearly seen from the above description, good heat resistance is an essential condition for ensuring the reliability required for a communication apparatus.

### Summary of the Invention:

Accordingly, an object of the present invention is to provide a zirconia ceramic material having good heat resistance and workability used for parts of an optical fiber connector.

In order to overcome the above drawbacks, as observed through examination of the zirconia materials, the present inventors found that if the material is formed mainly of zirconia partially stabilized by cerium oxide, it has good heat resistance and steam resistance and machinability is also improved. The present invention is based on these discoveries.

In order to achieve the above object, the present invention provides a part for an optical fiber connector for connecting an optical fiber; the part comprising: a ferrule having a narrow hole for receiving and holding the optical fiber; and a sleeve connecting and holding the ferrule; the ferrule and the sleeve being formed mainly of zirconia ceramics containing cerium oxide as a stabilizer.

### Brief description of the drawings:

Fig. 1 shows the construcion of an SC type optical connector. Plugs in which ferrules are fixed are inserted from both ends of the adapter via a split sleeve so as to connect fibers;
Fig. 2 is a simple cross sectional view of a ferrule material forming part of the optical connector according to the present invention. The inner diameter of the ferrule is 126 m and the optical fibers pass therethrough;
Fig. 3 is a outline drawing of the split sleeve material forming part of the optical connector according to the present invention. The inner diameter of the split sleeve is slightly smaller than the outer diameter of the ferrule and the split sleeve is capable of elastically supporting the ferrules;

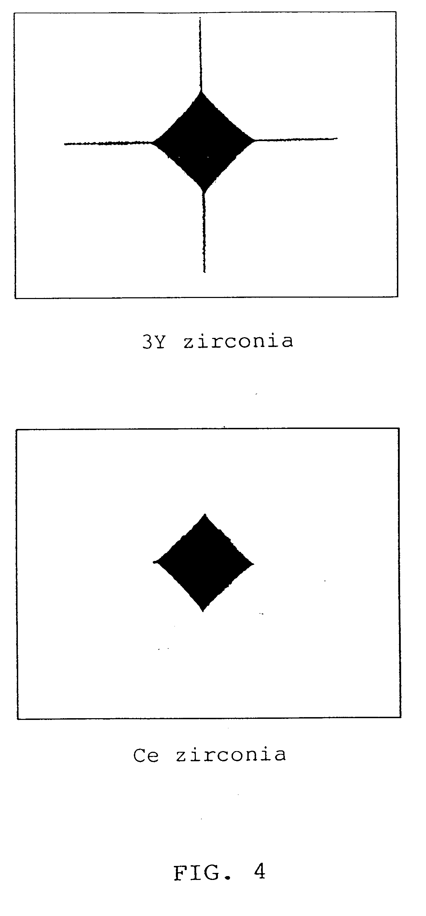

Fig. 4(a) and Fig. 4(b) are respectively an enlarged (100 times) when an indentor is forced into drawing zirconia of No 15 containing 3 mole% of yttrium and cerium zirconia of No 1 in Example 1 by employing a Vickers hardness meter. As is seen from Figs. 4 (a) and (b) the crack-occurrence phenomena of No 15 and No 1 conspicuously differ from each other; and

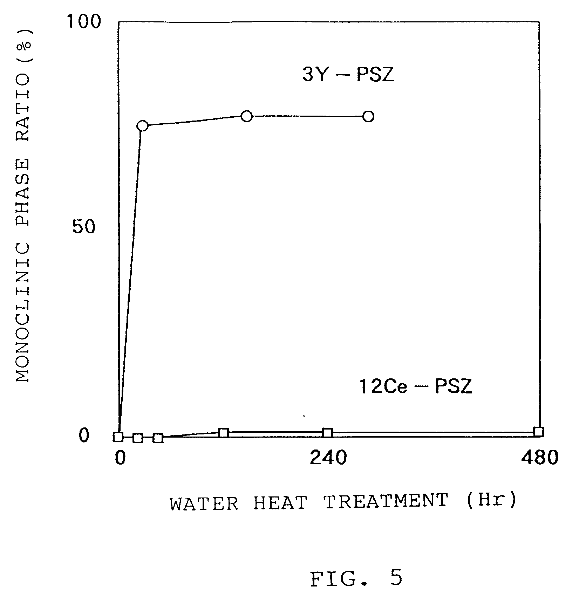

Fig 5. is a diagram showing the relative transformation rate from the tetragonal system to the monoclinic system on the surface layer of yttrium zirconia of No 15 and cerium zirconia of No 4 in Example 1 being subjected to saturated steam at a temperature of 170°C with a lapse of time after the ferrule materials are produced from yttrium zirconia and cerium zirconia by employing injection molding and further worked. As is seen from Fig. 5, a rapid transformation into the monoclinic system is detectable in zirconia containing 3 mole% of yttrium whereas almost no change is detectable in cerium zirconia.

### Description of the preferred embodiments:

Before describing the embodiment of the present invention, the operation will first be explained. Partially stabilized zirconia obtained by adding between 2 - 4 moles% of yttrium oxide is generally used when yttrium oxide zirconia is employed. Such a material possesses a lot of good properties such as higher bending strength and fracture toughness, and further, since it has a small grain size, it has a lower profile irregularity when it is worked. However, it possesses lower heat resistance. The heat resistance can be improved by completely stabilizing zirconia by adding between 6 - 10 moles% of yttrium oxide. However, this results in a considerable impairment of strength and toughness, thus almost failing to function as a material forming an optical fiber connector.

Both calcium oxide zirconia and magnesium oxide zirconia have lower strength and greater grain size.

On the other hand, it is known that cerium oxide zirconia ceramics have higher fracture toughness than zirconia obtained by adding other kinds of stabilizers so that they show plastic deformation in a limited range of the composition. Thus, when a sintered body is worked, grains hardly ever fall off. It also has good workability and very good heat stability, thus maintaining excellent reliability as a material.

As will be clearly understood from the above description, basically, ceramics used for ferrules or split sleeves as optical connector parts are preferably formed of zirconia stabilized with addition of cerium oxide.

Concerning the composition, cerium oxide is in a range of between 3 - 30%, and more preferably, 12 - 20% by weight. In particular, cerium oxide of approximately 16% by weight can provide high toughness. It is also effective to add alminum oxide in order to improve zirconia having rather low strength. As a result, the composition is preferably 50 - 90% by weight of zirconium oxide, 3 - 30% by weight of cerium oxide, 0 - 8% by weight of yttrium oxide and 0 - 50% by weight of aluminum oxide. In order to further improve the properties, 2% or less by weight of calcium oxide, magnesium oxide or lanthanum oxide, or the like, can be added. The crystalline phase of zirconia is mainly formed of the tetragonal phase, and other phase such as the cubic phase and the monoclinic phase. More specifically, the ratio is 50 - 100% of the tetragonal phase, 0 - 50% of the cubic phase and 0 - 30% of the monoclinic phase. It is most effective to have a ratio of 10% or less of the monoclinic phase and 70% or more of the tetragonal phase.

Fig. 4 shows traces of the Vickers indentors when a load of 20kg was applied to zirconia. As is seen from Fig. 4, cracks are barely detectable from the edges in the cerium oxide zirconia compared to the yttrium oxide zirconia. Consequently, it is understood that the former provides a material having higher toughness.

Further, Fig. 5 shows the relative transformation rate from the tetragonal phase to the monoclinic phase on the surface layer of the respective sintered bodies of cerium oxide (hereinafter referred to as Ce system) zirconia and yttrium oxide (hereinafter referred to as 3Y system) zirconia under saturated steam pressure at a temperature of 170°C with a lapse of time. As is also seen from Fig. 5, ce system has very good heat stability.

The average grain size of zirconia is 10µm or less, and more preferably, 3µm or less, in order to produce a remarkable effect.

In order to describe the present invention more specifically, examples will now be shown hereinafter. However, the present invention is not limited to these examples.

### Example 1

Zirconia powder, ceria powder, yttria powder, calcia powder, magnesia powder and lantania power having a purity of 99.9% or higher were mixed in the composition shown in Table 1 and the resulting mixture was formed by a rubber press at 2Ton/cm², followed by burning at a temperature of 1500°C in a stream of oxygen. Thus, a sintered body was obtained.

With regard to the sintered body, three-point bending strength, fracture toughness, crystalline phase, average grain size and deterioration-preventing properties caused by steam heat were measured. The results are shown in Table 2. As a comparative example, zirconia partially stabilized by 3 moles% of yttria were evaluated in a manner similar to the above sintered body and the results are shown in No 13 of Table 2.

The values shown in Table 2 were obtained by the following processes.
1) Three-point bending strength: measured at a load speed of 0.5mm/min according to JIS.
2) fracture toughness: measured according to the IF method.
3) crystalline phase: monoclinic system, measured the diffraction strength of the (-111), (111) faces.
   : tetragonal system, measured the diffraction strength of the (111) face.
   : cubic system, measured the diffraction strength of the (111) face.
4) average grain size: measured by SEM photographs according to the planometric method (excluding the measurement of grain size of alumina).
5) resistance to deterioration due to steam heat: measured a change in the ratio of transforming into the monoclinic system after a lapse of 24Hr at 7kg/cm² at a temperature of 170°C.

**Table 1**

| SAMPLE No | ZrO₂ | CeO₂ | Y₂O₃ | Al₂O₃ | OTHER COMPONENTS |
|---|---|---|---|---|---|
| 1 | 85.6 | 13.9 | 0 | 0 | CaO ; 0.5 |
| 2 | 84.3 | 15.6 | 0 | 0 | CaO ; 0.5 |
| 3 | 81.5 | 18.5 | 0 | 0 | |
| 4 | 84.0 | 16.0 | 0 | 0 | |
| 5 | 84.3 | 10.4 | 5.1 | 0 | MgO ; 0.2 |
| 6 | 86.7 | 13.0 | 0 | 0 | CaO ; 0.3 |
| 7 | 77.6 | 21.7 | 0.7 | 0 | |
| 8 | 79.8 | 15.2 | 0 | 5.0 | |
| 9 | 75.6 | 12.7 | 1.5 | 10.2 | |
| 10 | 59.6 | 10.4 | 0 | 30.0 | |
| 11 | 60.4 | 11.6 | 3.0 | 25.0 | |
| 12 | 81.6 | 14.9 | 0 | 1.5 | CaO ; 2.0 |
| 13 | 84.8 | 14.7 | 0 | 0 | LaO ; 0.5 |
| 14 | 81.7 | 17.8 | 0 | 0 | LaO ; 0.5 |
| 15 | 94.7 | 0 | 5.3 | 0 | (NOTE) |
| (NOTE) No 15 ; COMPARATIVE EXAMPLE | | | | | |

**Table 2**

| SAMPLE No | BENDING STRENGTH (kg/mm²) | FRACTURE TOUGHNESS (MPam^{1/2}) | RATE OF TRANSFORMING INTO MONOCLINIC SYSTEM (%) | AVERAGE GRAIN SIZE (µm) | RATE OF TRANSFORMING INTO MONOCLINIC SYSTEM UNDER STEAM HEAT (%) |
|---|---|---|---|---|---|
| 1 | 126.0 | 8.0 | 0.0 | 0.5 | 0.3 |
| 2 | 94.6 | 3.8 | 0.0 | 0.5 | 0.4 |
| 3 | 92.2 | 5.8 | 0.0 | 1.8 | 0.0 |
| 4 | 75.2 | 17.3 | 0.0 | 2.1 | 0.0 |
| 5 | 99.3 | 5.7 | 0.0 | 1.4 | 0.0 |
| 6 | 100.2 | 17.3 | 0.2 | 0.9 | 0.3 |
| 7 | 94.1 | 4.0 | 0.0 | 2.4 | 0.2 |
| 8 | 88.8 | 8.9 | 0.1 | 2.0 | 0.4 |
| 9 | 103.2 | 4.9 | 0.0 | 1.8 | 0.2 |
| 10 | 112.6 | 8.2 | 0.0 | 2.1 | 0.0 |
| 11 | 102.3 | 7.5 | 0.0 | 1.8 | 0.0 |
| 12 | 85.6 | 6.9 | 0.0 | 1.1 | 0.0 |
| 13 | 73.9 | 18.3 | 0.0 | 0.7 | 0.2 |
| 14 | 100.8 | 5.8 | 0.0 | 0.8 | 0.0 |
| 15 | 115.8 | 5.2 | 0.0 | 0.4 | 76.2 |

### Example 2

Ferrule materials were produced by employing the injection molding method using the powders having the compositions shown in Nos 1 and 4 of Table 1, and were further worked. The working time of the resulting ferrule materials were compared with that of a conventional ferrule formed of a 3Y zirconia mateirlal(No 15) with regard to inner core working, outer periphery working and lap working. The results are shown in Table 3. As can be seen from Table 3, the working time of the ferrule materials formed of Ce zirconia can be redueced to a greater degree in any working process than the conventional ferrule, and the yield of the worked product can be remarkably improved to as much as 95% or more than that of 3Y zirconia which has a yield of between 70 - 90%.

### Example 3

A ferrule material was produced by employing the injection molding method using the powder having the composition shown in No 4 of Table 1. It was further worked and other parts such as a flange, and the like, were added so as to assemble an optical fiber connector. When the resulting optical fiber connector was PC polished, "the fiber recessed amount" as a result of recessing a quartz fiber from the connector caused by polishing was very small, for example, 0.05µm or less compared to 0.10µm or less, for example, of 3Y zirconia of No 15. This is because the hardness of Ce zirconia is closer to that of quartz fiber than 3Y zirconia is, as shown in Table 5.

### Example 4

A ferrule material was produced by employing the extrusion molding method using the powder having the composition shown in No 3 of Table 1. It was further worked and other parts such as a flange, and the like, were added so as to assemble an optical fiber connector. Then, the insertion loss and the reflection loss of the optical cord were measured. 3Y zirconia (No 15) was evaluated in a manner similar to No 3. The results are shown in Table 4.

As is seen from Table 4, all the samples fully satisfy the standard value, and thus, there are almost no problems when they are put to practical use.

**Table 3**

| | REQUIRED TIME | | | |
|---|---|---|---|---|
| SAMPLE No | INNER CORE WORKING (min) | OUTER PERIPHERY WORKING (min) | LAP WORKING (hr) | YIELD OF PRODUCT (%) |
| 1 (Ce) | 11 | 17 | 2.0 | 97 |
| 4 (Ce) | 10 | 15 | 1.9 | 96 |
| 15 (Y) | 15 | 20 | 2.3 | 70∼90 |

**Table 4**

| SAMPLE No | INSERTION LOSS (dB) | | REFLECTION LOSS (dB) |
|---|---|---|---|
| | FIRST MEASUREMENT | SECOND MEASUREMENT | |
| 1 (Ce) A | 0.12 | 0.10 | 28.6 |
| B | 0.13 | 0.11 | 28.4 |
| C | 0.08 | 0.09 | 30.0 |
| D | 0.17 | 0.15 | 29.0 |
| 15 (Y) A | 0.12 | 0.14 | 27.9 |
| B | 0.16 | 0.14 | 28.6 |

In Table 4, A, B, C and D indicate different samples in the same lot.

An optical fiber connector having high heat resistance property and high strength and toughness, and further possessing good workability and environmental resistance. A ferrule having a narrow hole for receiving and holding an optical fiber and a sleeve connecting and holding the ferrule are formed mainly of zirconia ceramics obtained by adding cerium oxide as stabilizer.

## Claims

1. A part for an optical fiber connector for connecting an optical fiber; said part comprising:
a ferrule having a narrow hole for receiving and holding said optical fiber; and
a sleeve connecting and holding said ferrule;
said ferrule and said sleeve formed mainly of zirconia ceramics obtained by adding cerium oxide as a stabilizer.

2. A part according to cliam 1, wherein said ferrule and said sleeve are formed of a ceramic composition comprising 50 - 90% by weight of zirconium oxide, 3 - 30% by weight of cerium oxide, 0 - 8% by weight of yttrium oxide, and 2 - 50% by weight of aluminum oxide.

3. A part according to claim 1, wherein said ferrule and said sleeve are formed of a ceramic composition further comprising 2% or less by weight of at least one of calcium oxide, magnesium oxide and lanthanum oxide.

4. A ceramic composition suitable for optical fiber connectors, comprising 50 - 90% by weight of zirconium oxide, 3 - 30% by weight of cerium oxide, 0 - 8% by weight of yttrium oxide, and 2 - 50% by weight of aluminum oxide.

5. A ceramic composition according to claim 4, which further comprises 2% or less by weight of at least one of calcium oxide, magnesium oxide and lanthanum oxide.
